# EUROPEAN PATENT SPECIFICATION

(11) **EP 4 051 061 B1**
(45) Date of publication and mention of the grant of the patent: **23.08.2023**
(21) Application number: 20830009.5
(22) Date of filing: 29.10.2020
(51) Int. Cl.: A47J 31/40, A47J 42/50, G01F 11/24

(54) **AN ADJUSTABLE DOSING MEANS**
EINSTELLBARE DOSIERMITTEL
MOYEN DE DOSAGE RÉGLABLE

(30) Priority: 30.10.2019 TR 201916754
(43) Date of publication of application: 07.09.2022
(73) Proprietor: Arzum Elektrikli Ev Aletleri San. Ve Tic. A.S., 34050 Istanbul (TR)
(72) Inventor: AT LLA, Ersoy, 34050 Eyüp/ stanbul (TR); YÖRÜK, Hasan, 34050 Eyüp/ stanbul (TR); D LMAN, Berke, 34050 Eyüp/ stanbul (TR)
(86) International application number: PCT/TR2020/051017
(87) International publication number: WO 2021/086296

(56) References cited:
- DE-U1- 9 202 015
- US-A- 2 339 908
- US-A- 4 013 199
- US-A- 5 123 572

## Description

### Technical Field

The present invention relates to a dosing means for dosing the materials to be used, especially coffee beans.

### Background of the Invention

The devices that are used for preparing food products might take the materials required for preparing the said product from a container and transfer them to another container. Similarly, some coffee machines might take the coffee beans from a bean container and transfer them to another container.

Dosing means enable a predefined amount of material to be taken from a material container. Afterwards, the taken material might automatically be fed to another container.

While preparing coffee beverage, the users might want to use more or less coffee, according to their palates.

The United States patent document numbered US10383479B2 in the background of the invention discloses a coffee bean dispenser. The said dispenser comprises a bean container above, and a dosing means suitable for receiving a predetermined amount of beans from the said container, and to transfer the beans to another container. The dosing means comprises a body having two apertures, one being above and one being below, and a container rotatable inside the body. However, the volume of the container in the said dosing means is constant and thus, the amount of the material to be taken cannot be adjusted.

The United States patent document numbered US2339908 in the background of the invention discloses an apparatus for delivering measured quantities of free flowing powdered or granular materials, such as sugar, salt and the like, at regular predetermined intervals.

The United States patent document numbered US5123572 in the background of the invention discloses an adjustable measuring apparatus which may be employed with a material hopper and a grinding apparatus to measure a desired volume from the material hopper and quickly and efficiently deposit the material into the grinding apparatus

The United States patent document numbered US4013199 in the background of the invention discloses an improved measuring dispenser which is constructed so that the size of the measuring chambers may be readily varied and the dispenser may be reliably operated over and over again.

In the state of the art, no dosing means, where the amount of the materials to be taken is adjustable, is encountered. However, such a dosing means is needed.

### Short Description of the Invention

The object of the invention is to provide a dosing means for dosing the materials to be used, and especially coffee beans, where the amount of the materials to be taken may be changed.

### Detailed Description of the Invention

The dosing means in order to fulfill the objects of the present invention is illustrated in the attached figures, where:
- **Figure 1.**: Cross-sectional view of the placement of the external body and the limiter, in the inventive dosing means
- **Figure 2.**: Cross-sectional view of the positioning of the external body and the internal body, in the inventive dosing means
- **Figure 3.**: Cross-sectional view of the placement of the external body, internal body and the limiter, in the inventive dosing means

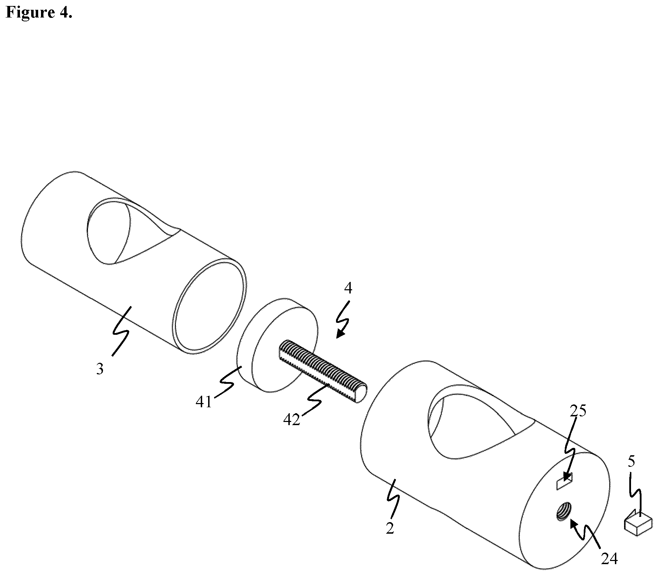

- **Figure 4.**: Exploded view of an embodiment of the inventive dosing means

Elements shown in the figures are individually numbered, and the correspondence of these numbers are given as follows:
**1.** Dosing means
**2.** External body
   **21.** Housing
   **22.** Inlet opening
   **23.** Outlet opening
   **24.** Shaft hole
   **25.** Switch hole
**3.** Internal body
   **31.** Gap
   **32.** Opening
**4.** Limiter
   **41.** Head
   **42.** Shaft
**5.** Switch

Dosing means (1) for dosing the materials to be used, and especially coffee beans, where the amount of the materials to be taken may be changed, essentially comprises;
- at least one external body (2) comprising at least one housing (21) at least one end of which is open, and which has a hollow, circular cross-section, at least one inlet opening (22) for receiving materials, at least one outlet opening (23) for discharging the materials, and at least one shaft hole (24) located at the closed end of the external body (2), suitable for a shaft to pass through,
- at least one internal body (3) having at least one gap (31) suitable for receiving the materials therein and at least one opening (32) for allowing access to the said gap (31), and having hollow, circular cross-section with one end open, and which is suitable to enter the housing (21) and rotate therein,
- at least one limiter (4) having at least one head (41) which is suitable to enter the said gap (31) and move, therein, towards the closed end of the internal body (3), and at least one shaft (42) suitable for passing through the shaft hole (24).

The dosing means (1) for dosing the materials to be used, especially coffee beans, wherein the amount of the receivable materials could be changed, comprises at least one external body (2) having at least one housing (21) of hollow, circular cross-section. One end of the housing (21) is open, and the housing has a circular cross-section. In other words, one end of the housing (21) is open and the other is closed. The circular cross-section of the housing (21) might be of a constant radius throughout the housing (21), or it might vary throughout the housing (21). In other words (21) the housing (21) might have a cylindrical or conical form.

The materials to be used are taken inside the housing (21) via the at least one inlet opening (22). The materials inside the housing (21) are discharged via the at least one outlet opening (23). The inlet opening (22) and the outlet opening (23) extend from the lateral surface of the housing (21) to the end of the external body (2). In other words, the inlet opening (22) and the outlet opening (23) extend from the outer part of the external body (2) to the housing (21). The inlet opening (22) and the outlet opening (23) are preferably located in opposite parts of the external body (2).

To exemplify, if the inlet opening (22) is on the upper part of the external body (2), then the outlet opening (23) is on the lower part of the external body (2).

The external body (2) comprises at least one shaft hole (24) on the closed part of the housing (21), which is suitable for a shaft to pass through. In an embodiment of the invention, the shaft hole (24) comprises teeth on its inner part.

The inventive dosing means (1) comprises at least one internal body (3) having a hollow, circular cross-section, one end of which is open, and which is suitable to enter the housing (21) and rotate therein. The internal body (3) comprises at least one gap (31) suitable for receiving the materials therein, and at least one opening (32) for allowing access to the said gap (31). The opening (32) of the internal body (3) reciprocates the inlet opening (22) in one position of the internal body (3) inside the housing (21). By this, the required materials might be taken into the gap (31) inside the internal body (3) from the outside of the external body (2). The opening (32) of the internal body (3) reciprocates the outlet opening (23) in another position of the internal body (3) inside the housing (21). By this, the materials inside the gap (31) inside the internal body (3) might be discharged to the outside of the external body (3). The circular cross-section of the internal body (3) might be of a constant radius throughout the internal body (3), or it might vary throughout the internal body (3). In other words (21) the housing (21) might have a cylindrical or conical form.

The inventive dosing means (1) comprises at least one limiter (4) having at least one head (41) which is suitable to enter the said gap (31) and move, therein, towards the closed end of the internal body (3). On one side of the limiter (4), at least one shaft (42) suitable for passing through the shaft hole (24) is present. The diameter of the head (41) might be smaller than, bigger than or equal to the diameter of the shaft (42).

In an embodiment of the invention, the said shaft (42) at least partially comprises teeth on its outer part, reciprocating the teeth of the shaft hole (24). By this, when the limiter (4) is rotated, it might move inwards or outwards inside the external body (2), and thus the internal body (3), according to its direction of rotation.

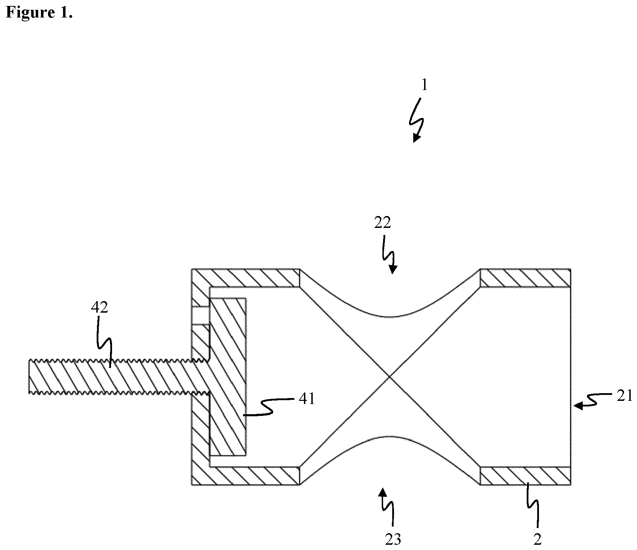

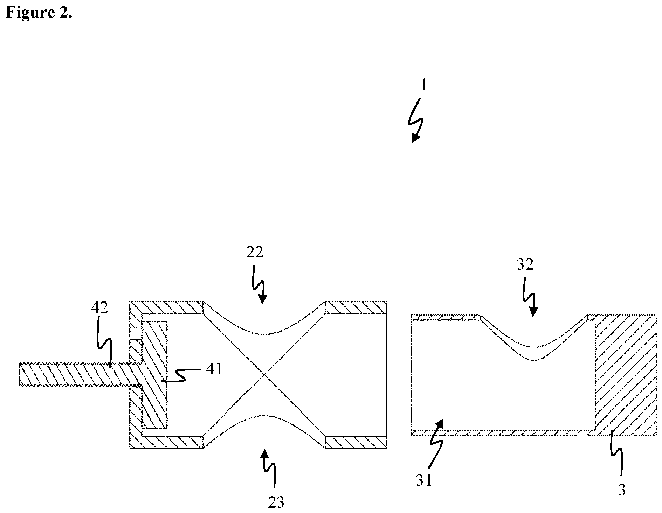

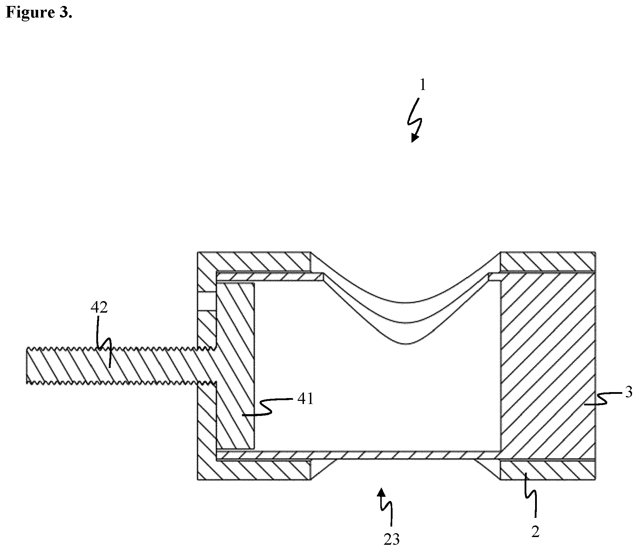

In the preferred embodiment of the invention, the inventive dosing means (1) is used as follows:
The limiter (4) is placed inside the external body (2) such that the shaft (42) enters the shaft hole (24). Afterwards, the limiter (4) is rotated as much as it can be, such that the head (41) of the limiter (4) gets closer to the shaft hole (24) (Figure 1). By this, the limiter (4) is mounted to the external body (2). Afterwards, the internal body (3) is positioned such that its opening (32) faces the open end of the external body (2) (Figure 2), and then the internal body (3) is entered into the external body (2) (Figure 3). In this position, the head (41= of the limiter (4) might be moved inside the internal body (3), thereby changing the volume of the gap (31) which is able to receive material, and thus, the amount of material that can enter into the said gap (31).

In an embodiment of the invention, the number and the pitch of the threads (teeth) on the shaft (42) and the shaft hole (24) are determined according to the desired amount of distance that the limiter (4) should move for one revolution of the shaft (42). When the pitch is greater, the limiter (4) moves a greater distance per revolution of the shaft (42), compared to a smaller pitch. By this, the adjustment sensitivity of the amount of materials to be taken may be changed.

In an embodiment of the invention, the external body (2) comprises at least one switch hole (25) on its face having the shaft hole (24). Said switch hole (25) is suitable for a switch to be placed therein. In this embodiment, the inventive dosing means (1) might comprise at least one switch (5) suitable for placing inside the said switch hole (25). The switch (5) is placed in a manner that when the limiter (4) is moved inside the external body (3) until the face comprising the said switch hole (25), the head (41) of the limiter (4) changes the state of the switch (5). By this, this position of the limiter (4) may be detected, and thus the amount of materials that could be taken inside the inner body (3) is calibrated. This position is the position where the maximum amount of materials could be stored inside the internal body (3). Since how much the limiter (4) might move per one revolution of the shaft (42) is known, the amount of change of the materials that can be taken inside the internal body (3) is also known.

According to the invention, usable with the other embodiments, the limiter (4) comprises at least one magnet. The said magnet is preferably located on the head (41). In this embodiment, a magnetic sensor, the state of which might be changed with the effect of the said magnet, is located on the outside of the external body (2). The said magnetic sensor may be a reed switch or a magnetic field sensor, although it is not limited to these examples. By this, the number of revolutions completed by the head (41) could be calculated. In an embodiment connected to this embodiment, at least two and preferably three magnetic sensors are located outside the external body (2). By this, the direction of rotation of head (41) could also be determined.

In an embodiment of the invention, usable with the other embodiments, the shaft (42) might be driven via a knob. In this embodiment, the user might control the limiter (4) by hand. In this embodiment, the location where the head (41) presses on the switch (5) is considered to be the starting location. In this embodiment, the knob might comprise a mark showing the relative position of the knob with respect to a second mark (e.g. position marks labeled as 6g, 7g, and 8g). By this, the user might understand to which position he should turn the knob in order to achieve the desired adjustment. Alternatively, a control unit takes the location at which the head (41) presses on the switch as the starting position and determines how much, and towards which direction the limiter (4) is rotated, according to the data it receives from the magnetic sensors. As the user rotates the knob, the control unit calculates, also using the pitch data, how much the limiter (4) is moved and thus, how much material the internal body (3) might receive. In this embodiment, a feedback relating to the amount of materials receivable might also be given to the user. Said feedback might be via a notification via a cell phone as well as visual and/or auditory feedback.

In an embodiment of the invention, usable with the other embodiments, the shaft (42) might be driven via an electric motor. In this embodiment, the motor might be driven by a control unit either directly or via a driving circuit. In this embodiment, the location where the head (41) presses on the switch (5) is considered to be the starting location. The control unit, starting from the said starting location, might calculate how much the limiter is moved, using the driving time of the motor and the pitch data. Alternatively, a control unit takes the location at which the head (41) presses on the switch, again, as the starting position and determines how much, and towards which direction the limiter (4) is rotated, according to the data it receives from the magnetic sensors. The control unit then calculates, also using the pitch data, how much the limiter (4) is moved and thus, how much material the internal body (3) might receive. The embodiment where the magnetic sensors are used provides a more sensitive adjustment means, compared to the embodiments not utilizing magnetic sensors. In this embodiment, the user moves the motor by the commands he gives via an input means such as a push button or a potentiometer. Additionally, the user might indicate how much material he wishes to use via an interface. In this case, the control unit moves the limiter (4) such that the amount of materials required by the user might be stored inside the inner body (3). For example, let us assume that the internal body might store 8g of materials at the position where the head (41) contacts the switch (5). When the user indicates that he wishes to use 6 g of materials via the said interface, the control unit calculates how many turns towards which direction should the limiter (4) be rotated, in order to restrict the volume of the inner body (3) to 6g. Afterwards, the control unit rotates the limiter (4).

The internal body (3) might be rotated by driving at preferably its closed end. When the opening (32) of the internal body (3) is rotated such that it reciprocates the inlet opening (22), the materials might enter into the internal body (3). When the opening (32) of the internal body (3) is rotated such that it reciprocates the outlet opening (23), the materials inside the internal body (3) might be discharged. Said drive might be applied by hand or a driving means such as a motor.

In an embodiment of the invention, the movement of the head (41) towards the inside of the internal body (3) might be achieved by a force exerted on the shaft (42) which at least has a component on the shaft (42). In a related embodiment, at least one bulge (not shown) for letting the user to understand that the head (41) reached a predetermined location or locations, is present on the internal body (3). Said bulge is located so as to narrow the diameter of the internal body (3). When the head (41) reaches the said bulge, it stops. The force required to be exerted on the head (41) for the head (41) to be disengaged from the said bulge is greater than the minimum force required for moving the head (41). The said bulges might be placed in order to limit the volume of the internal body (3) to predefined values. For example, they might be placed such that they limit the volume of the internal body (3) such that it might receive 6g, 7g and 8g of material. In a related embodiment, the inventive dosing means (1) comprises at least one spring (not shown) in order to pull the head towards (41) the said bulge, or to push the head (41) away from the said bulge. Said spring is preferably located between the head (41) and the face of the external body (2) comprising the shaft hole (24).

In an embodiment of the invention, the external body (2) and the internal body (3) each comprise at least one escape hole (not shown) for discharging the materials that might build up over time between the external body and the internal body (3) and/or the head (41). The escape hole of the external body (2) is located on the lateral wall of the external body (2), on the part of the said wall that is closer to the wall having the shaft hole (24). Similarly, the escape hole of the internal body (3) is preferably located on the lateral wall of the internal body (3), on the part of the said wall that is closer to the wall having the shaft hole (24) when the internal body (3) is placed inside the external body (2). The said escape holes are positioned such that at at least one position of the internal body (3) and the external body (2), relative to each other, the said escape holes at least partially align with each other. By this, the materials that might build up between the head (41) and the internal body (3) might be discharged to the outside of the dosing means (1).

The inventive dosing means (1) is suitable to be used with a grinder and/or a hot beverage preparing machine, especially a coffee machine, and more especially a Turkish coffee machine.

## Claims

1. A dosing means (1) for dosing the materials to be used, and especially coffee beans, where the amount of the materials to be taken may be changed, comprising;
- at least one external body (2) comprising at least one housing (21) one end of which is open and the other is closed, and which has a hollow, circular cross-section, at least one inlet opening (22) for receiving materials, at least one outlet opening (23) for discharging the materials,
- at least one internal body (3) having at least one gap (31) suitable for receiving the materials therein and at least one opening (32) for allowing access to the said gap (31) which is suitable to enter the housing (21) and rotate therein,
- the external body (2) having at least one shaft hole (24) on the closed end of the housing (21), which is suitable for a shaft to pass through,
- the internal body (3) having a hollow, circular cross-section, one end of which is open and the other is closed,
- at least one limiter (4) having at least one head (41) which is suitable to enter the said gap (31) and move, therein, towards the closed end of the internal body (3), and at least one shaft (42) suitable for passing through the shaft hole (24), **characterized by**
- the limiter (4) having at least one magnet.

2. A dosing means (1) as in Claim 1 **characterized by** the shaft hole (24) of the external body (2) having threads on its inner part

3. A dosing means (1) as in Claim 2 **characterized by** the limiter (4) comprising a shaft (42) at least partially having threads on its outer part reciprocating the threads comprised by the shaft hole (24).

4. A dosing means (1) as in Claim 3 **characterized by** the external body (2) comprising at least one switch hole (25) on its face having the shaft hole (24).

5. A dosing means (1) as in Claim 4 **characterized by** at least one switch (25) that is placed in the switch hole (25) in a manner that when the limiter (4) is advanced inside the external body (3) until the face comprising the said switch hole (25), the head (41) of the limiter (4) changes its state.

6. A dosing means (1) as in as in any of the preceding claims, **characterized by** at least one, preferably at least three magnetic sensors located on the outside of the external body (2), the state of which might be changed with the effect of the said magnet.

7. A dosing means as in Claim 6, **characterized by** a control unit adapted to take the location at which the head (41) presses on the switch as the starting position, to receive data from the magnetic sensors, to calculate how much, and towards which direction the limiter (4) is rotated, according to the data it receives from the magnetic sensors, to calculate how much the limiter (4) is moved and thus, how much material could be stored by the internal body (3), by also using the pitch data.

8. A dosing means (1) as in Claim 7 **characterized by** at least one motor for driving the shaft (42).

9. A dosing means (1) as in Claim 8, **characterized by** the control unit adapted to receive data from the user, via an interface, regarding how much material should be used, to move the limiter (4) so as to allow the amount of material indicated by the user to be stored inside the internal body (3).

10. A dosing means (1) as in Claim 1, **characterized by** the internal body (3) comprising at least one bulge for letting the user to understand that the head (41) reached a predetermined location or locations.

11. A dosing means (1) as in Claim 10, **characterized by** a spring, for pulling the head (41) towards or pushing the head (41) away from the bulge, that is located between the head and the surface of the external body (2) comprising the shaft hole (24).

12. A dosing means (1) as in Claim 1, **characterized by** the external body (2) and the internal body (3), each comprising at least one escape hole for discharging the materials that might build up over time between the external body and the internal body (3) and/or the head (41).

13. A grinder **characterized in that** it comprises a dosing means (1) according to any of the Claims 1-12.

14. A hot beverage preparing apparatus, and especially a Turkish coffee machine, **characterized in that** it comprises a dosing means (1) according to any of the Claims 1-12.

## Patentansprüche

1. Zur Dosierung der verwendeten Zutaten und insbesondere der Kaffeebohnen mit einer Funktion zur Veränderung der entnommenen Zutatenmenge eine Dosierungsvorrichtung (1), **gekennzeichnet durch**
- mindestens ein Außengehäuse (2) mit mindestens einer hohlen Aussparung (21) mit kreisförmigem Querschnitt und einem offenen und einem geschlossenen Ende, mindestens einer Einlassöffnung (22) zur Aufnahme von Zutaten, mindestens einer Auslassöffnung (23) zum Austragen von Zutaten,
- mindestens ein Innengehäuse (3), das geeignet ist zum Einführen und Drehen in das Gehäuse (21), mit mindestens einem Hohlraum (31), der zur Aufnahme von Zutaten geeignet ist, und mindestens einer Öffnung (32), die den Zugang zu diesem Hohlraum ermöglicht,
- mindestens ein Außengehäuse (2) am geschlossenen Ende der Aussparung (21) mit mindestens einem Spindelloch (24), das zum Durchführen einer Spindel geeignet ist,
- mindestens ein hohles Innengehäuse (3) mit kreisförmigem Querschnitt, das an einem Ende offen und am anderen Ende geschlossen ist,
- mindestens einen Kopf (41), der geeignet ist, in den Hohlraum (31) einzudringen und sich dort in Richtung des geschlossenen Endes des Innengehäuses (3) zu bewegen, und mindestens eine Spindel (42), die geeignet ist, durch das Spindelloch (24) durchzudringen, und mindestens einen Begrenzer (4) enthält und
- einen Begrenzer (4) mit mindestens einem Magneten.

2. Dosierungsvorrichtung (1) nach Anspruch 1, **gekennzeichnet durch** das Spindelloch (24) des Außengehäuses (2) mit einem Gewinde auf der Innenseite.

3. Dosierungsvorrichtung (1) nach Anspruch 2, **gekennzeichnet durch** einen Begrenzer (4) mit Gewinde, das zumindest in einem Teil seines Außenbereichs den Gewindegängen des Spindellochs (24) entspricht.

4. Dosierungsvorrichtung (1) nach Anspruch 3, **gekennzeichnet durch** ein Außengehäuse (2) mit mindestens einem Schlüsselloch (25) an der Fläche, an welcher sich das Spindelloch (24) befindet.

5. Dosierungsvorrichtung (1) nach Anspruch 4, **gekennzeichnet durch** mindestens einen Schlüssel (5), der im Schlüsselloch (25) dergestalt positioniert ist, dass der Kopf (41) des Begrenzers (4) seinen Zustand ändert, sobald der Begrenzer (4) an die Fläche vorgeschoben wird, auf welcher sich das Schlüsselloch (25) im Außengehäuse (2) befindet.

6. Dosierungsvorrichtung (1) nach einem der oben genannten Ansprüche, **gekennzeichnet durch** mindestens einen und vorzugsweise mindestens drei Magnetsensoren, die außerhalb des Außengehäuses (2) angeordnet sind und deren Zustand durch die Wirkung des Magneten verändert werden kann.

7. Dosierungsvorrichtung (1) nach Anspruch 6, **gekennzeichnet durch** mindestens eine Kontrolleinheit, ausgehend von dem Punkt, an dem der Kopf (41) den Schlüssel drückt, von Magnetsensoren Daten empfängt, anhand der von den Magnetsensoren empfangenen Daten die Richtung und die Weite berechnet, in welcher und um welche sich der Begrenzer dreht, unter Verwendung der Daten der Gewindegänge die Bewegung des Begrenzers (4) und damit die Aufnahmemenge des Innengehäuses (3) berechnet.

8. Dosierungsvorrichtung (1) nach Anspruch 7, **gekennzeichnet durch** mindestens einen Motor zum Antrieb der Spindel (42).

9. Dosierungsvorrichtung (1) nach Anspruch 8, **gekennzeichnet durch** eine Kontrolleinheit, die dazu eingerichtet ist, vom Benutzer über eine Schnittstelle Informationen über die gewünschte Zutatenmenge zu empfangen und den Begrenzer (4) im Innengehäuse (3) zur Aufnahme der Zutaten in gewünschter Menge zu bewegen.

10. Dosierungsvorrichtung (1) nach Anspruch 1, **gekennzeichnet durch** ein Innengehäuse (3), das mindestens eine Kerbe enthält, um zu erkennen, dass der Kopf (41) eine vorbestimmte Position oder Positionen erreicht hat.

11. Dosierungsvorrichtung (1) nach Anspruch 10, **gekennzeichnet durch** mindestens eine Feder, die zwischen dem Kopf und der Oberfläche des Außengehäuses (2) mit dem Spindelloch (24) angeordnet ist, um den Kopf (41) in die Kerbe zu ziehen oder zu drücken.

12. Dosierungsvorrichtung (1) nach Anspruch 1, **gekennzeichnet durch** ein Außengehäuse (2) und ein Innengehäuse (3), die an ihren Seitenwänden jeweils mindestens eine Austragsöffnung aufweisen, um die Zutaten, die sich im Laufe der Zeit zwischen dem Außengehäuse (2) und dem Innengehäuse (3) und/oder dem Kopf (41) ansammeln können, abzuführen.

13. Mühle mit einer Dosierungsvorrichtung nach einem der Ansprüche 1 bis 12.

14. Maschine zur Zubereitung von Heißgetränken und insbesondere zur Zubereitung von türkischem Mokka mit einer Dosierungsvorrichtung nach einem der Ansprüche 1 bis 12.

## Revendications

1. Pour le dosage des ingrédients à utiliser, en particulier les grains de café, la quantité de matière à utiliser peut être variée ;
- au moins un boîtier (2) comportant au moins une fente (21) de section circulaire avec au moins une extrémité ouverte, l'autre fermée, creuse à l'intérieur, au moins une ouverture d'entrée (22) pour recevoir des matériaux, au moins une ouverture de sortie (23) pour décharger des ingrédients,
- au moins un corps intérieur (3) comportant au moins une cavité (31) apte à recevoir des matériaux et au moins une ouverture (32) donnant accès à ladite cavité, apte à pénétrer et à tourner dans la fente (21),
- au moins un boîtier (2) comportant, à l'extrémité fermée de la fente (21), au moins un alésage d'arbre (24) permettant le passage d'un arbre,
- au moins un corps intérieur (3) dont une extrémité est ouverte et l'autre fermée, creux et de section circulaire,
- un doseur (1) comprenant au moins un restricteur (4) ayant au moins une tête (41) apte à pénétrer dans ladite cavité (31) et à s'y déplacer vers l'extrémité fermée du corps intérieur (3) et au moins un arbre (42) apte à passer à travers l'alésage de l'arbre (24),
- **caractérisé en ce que** le restricteur (4) a au moins un aimant.

2. Doseur (1) selon la revendication 1, **caractérisé par le fait que** le boîtier extérieur (2) avec des filets sur son côté intérieur a un alésage d'arbre (24).

3. Doseur (1) selon la revendication 2, caractérisé dans au moins une partie de sa région extérieure par un restricteur (4) ayant des dents correspondant aux dents de l'alésage de l'arbre (24).

4. Doseur (1) selon la revendication 3, **caractérisé par le fait que** le boîtier (2) comporte au moins un trou de serrure (25) sur la face de l'alésage de l'arbre (24).

5. Doseur (1) selon la revendication 4, **caractérisé en ce que** l'au moins un interrupteur (5) est positionné de manière à modifier l'état de la tête (41) du restricteur (4) lorsque le restricteur (4) est avancé dans le boîtier extérieur (2) au trou de la serrure (25), jusqu'à la surface où se trouve ledit trou de serrure (25).

6. Doseur (1) selon l'une quelconque des revendications précédentes, **caractérisé par** au moins un et de préférence au moins trois capteurs magnétiques situés à l'extérieur du boîtier extérieur (2) et dont l'état peut être modifié par l'action dudit aimant.

7. Doseur (1) selon la revendication 6, **caractérisé par** au moins une unité de commande adaptée pour prendre le point où la tête (41) appuie sur l'interrupteur comme point de départ et pour recevoir des données des capteurs magnétiques, pour calculer dans quel sens et à quelle distance le restricteur tourne en fonction des données reçues des capteurs magnétiques, pour calculer à quelle distance le restricteur (4) se déplace en utilisant les données de pas des dents et donc la quantité de matériau que le corps intérieur (3) peut recevoir.

8. Doseur (1) selon la revendication 7, **caractérisé par** au moins un moteur pour l'entraînement de l'arbre (42).

9. Doseur (1) selon la revendication 8, **caractérisé par le fait que** l'unité de commande est adaptée pour recevoir, via une interface, des informations de l'utilisateur sur la quantité de l'ingrédient qu'il souhaite utiliser, et pour déplacer le restricteur (4) afin que le boîtier intérieur (3) puisse stocker autant d'ingrédient que l'utilisateur le souhaite.

10. Doseur (1) selon la revendication 1, **caractérisé en ce que** le corps intérieur (3) comprend au moins une encoche pour reconnaître que la tête (41) est arrivée à une ou des positions prédéterminées

11. Doseur (1) selon la revendication 10, **caractérisé par** au moins un ressort situé entre la tête et la surface du boîtier (2) ayant l'alésage de l'arbre (24) pour tirer ou pousser la tête (41) dans l'encoche.

12. Doseur (1) selon la revendication 1, **caractérisé par le fait que** le corps extérieur (2) et le corps intérieur (3) sont pourvus d'au moins une ouverture d'évacuation sur leurs parois latérales pour évacuer les matières qui peuvent s'accumuler au fil du temps entre le corps extérieur (2) et le corps intérieur (3) et/ou la tête (41).

13. Broyeur doté d'un doseur tel que décrit dans l'une des revendications 1 à 12.

14. Machine de préparation de boissons chaudes selon l'une des revendications 1 à 12, comprenant en outre un doseur, en particulier une machine de préparation de café turc.
